**Europäisches Patentamt**

**European Patent Office**

**Office européen des brevets**

(19)

(11) Veröffentlichungsnummer : **0 185 036**
**B1**

(12) **EUROPÄISCHE PATENTSCHRIFT**

(45) Veröffentlichungstag der Patentschrift :
**15.03.89**

(21) Anmeldenummer : **85902481.2**

(22) Anmeldetag : **03.06.85**

(86) Internationale Anmeldenummer :
**PCT/DE 85/00192**

(87) Internationale Veröffentlichungsnummer :
**WO/8505539 (19.12.85 Gazette 85/27)**

(51) Int. Cl.⁴ : **A 23 N   5/00**, F 26 B   3/34,
**A 23 G   1/02, A 23 F   5/02**

(54) **VERFAHREN UND VORRICHTUNG ZUR AUFBEREITUNG VON KAKAO- UND KAFFEEBOHNEN.**

(30) Priorität : **01.06.84 DE 3420591**

(43) Veröffentlichungstag der Anmeldung :
**25.06.86 Patentblatt 86/26**

(45) Bekanntmachung des Hinweises auf die Patenterteilung : **15.03.89 Patentblatt 89/11**

(84) Benannte Vertragsstaaten :
**FR GB NL**

(56) Entgegenhaltungen :
**FR—A— 1 223 489**
**FR—A— 2 319 863**
**US—A— 2 526 872**
**US—A— 3 989 849**

(73) Patentinhaber : **DREVICI-KUX, Ursula**
**St. Pierre 1**
**CH-1003 Lausanne (CH)**

**DREVICI, Noe**
**St. Pierre 1**
**CH-1003 Lausanne (CH)**

(72) Erfinder : **DREVICI-KUX, Ursula**
**St. Pierre 1**
**CH-1003 Lausanne (CH)**
Erfinder : **DREVICI, Noe**
**St. Pierre 1**
**CH-1003 Lausanne (CH)**

(74) Vertreter : **Dickel, Klaus, Dipl.-Ing.**
**Julius-Kreis-Strasse 33**
**D-8000 München 60 (DE)**

EP 0 185 036 B1

# Beschreibung

Die Erfindung betrifft ein Verfahren sowie eine Vorrichtung zur witterungsunabhängigen, kontinuierlichen Aufbereitung von Kaffee- und Kakaobohnen, bei welchem man die Bohnen aufbricht und von den übrigen Fruchtbestandteilen abtrennt, worauf man die Bohnen einer Warmlufttrocknung unterwirft.

Ein Verfahren dieser Art ist aus der US-A-2,526,872 bekannt. Beim weiteren Behandlungsverlauf soll jedoch dort jegliche Fermentierung unterbunden werden.

Für ein ähnliches Verfahren ist es aus der DE-A-2 634 267 bekannt, die Bohnen einer Mikrowellenbehandlung auszusetzen.

Im allgemeinen ist es üblich, die Früchte manuell aufzubrechen und die Bohnen von den übrigen Bestandteilen getrennt zu trocknen. Da die Bohnen hierbei auf einer Unterlage aufliegen, verhornt die Schale einseitig, was dazu führt, daß die Wärmedurchdringung von dieser Seite schlechter ist. Hieraus ergibt sich wiederum eine ungleichmäßige Fermentierung. Infolge der Witterungsabhängigkeit der Fermentierung ergeben sich Zeitverluste und eine Minderqualität, die mit etwa 20 % anzusetzen ist. Darüber hinaus tritt eine Verunreinigung durch Insekten, Würmer, Larven und Haare von Nagern, wie etwa Ratten, ein. Schließlich ergibt sich auch eine Fehlfermentierung durch wilde Hefen, wodurch ein weiterer Qualitätsausfall verursacht wird.

In Kenntnis dieses Standes der Technik liegt der Erfindung die Aufgabe zugrunde, ein Verfahren sowie eine Vorrichtung der eingangs genannten Art zu schaffen, wobei unter Behebung der aufgezeigten Nachteile ein wesentlich verminderter Qualitätsausfall eintritt, während die Ausbildung der Farbe sowie die Geruchs- und Geschmacksstoffe bzw. deren Vorstufen im Kotyledon der Bohne kontrolliert und nach Wunsch geregelt werden können.

Nach der Erfindung liegt die Lösung darin, daß man die Warmlufttrocknung in zwei Stufen durchführt, wobei man in der ersten Stufe eine Trocknung im Gegenluftstrom bis auf einen Feuchtigkeitsgehalt von etwa 47 % und in der zweiten Stufe eine Wirbelschichttrocknung bis auf einen Feuchtigkeitsgehalt von etwa 12 % durchführt und in der zweiten Stufe eine Fermentierung unter Zugabe von Fermentierungshilfsmitteln ausführt. Vorteilhafterweise führt man im Anschluß an die zweite Trocknungsstufe eine Durchwirbelung mit Luft von Raumtemperatur etwa 3 Minuten lang durch.

Hierdurch ergibt sich eine gleichmäßig hohe Qualität der Bohnen. Sie sind völlig frei von Verunreinigungen der eingangs genannten Art uns somit hygienisch absolut einwandfrei.

Die Vorrichtung zeichnet sich dadurch aus, daß die Trocknungseinrichtung, der eine Mikrowellenzone nachgeordnet ist, aus einem Drehtrockner und einem sich diesem anschließenden Wirbelschichttrockner besteht.

Innerhalb des Wirbelschichttrockners sind vorzugsweise Düsen für die Zugabe von Fermentierungshilfen angeordnet. Der Aufbrecheinrichtung für die Früchte ist, gemäß einer zweckmäßigen Ausgestaltung, eine Gefriereinrichtung vorgeordnet.

Innerhalb der Mikrowellenzone werden die Bohnen von innen heraus nach außen erhitzt, infolge der Schwingungen, die die $H_2O$-Moleküle durchführen. Das Restwasser in den Bohnen verdampft durch die interne Reibung. Es kann sich keine Verhornung der Bohnenaußenhaut bilden, die bei anderen Trocknungsarten eine gleichmäßige Wärmedurchdringung verhindert. Es läßt sich somit ein Feuchtigkeitsgehalt bis unter 5 % erreichen, ohne daß die Schale hart geworden, oder das Kotyledon zerstört ist. Innerhalb der Mikrowellenzone wird nicht nur eine Trocknung durchgeführt, sondern es vollziehen sich auch hier chemische Reaktionen der Fermentation. Das bedeutet, daß die semipermeablen Zellen der Bohnen permeabler werden und den Austausch der Chinone, Aminosäuren, Gerbsäuren etc. zwischen den Zellen gestattet, wodurch die eigentlichen Aroma- und Geschmacksvorstufen gebildet werden.

Die Bohnen werden durch den Drehtrockner gegen den Strom warmer Luft geführt, wobei sie soweit getrocknet werden, daß sie nicht mehr kleben, was etwa bei einem Feuchtigkeitsgehalt von 50 bis 45 % eintritt. Im Wirbelschichttrockner befindet sich ein Fließbett, wobei die erhitzte Luft durch eine Lochspaltplatte von unten an die Bohnen herangeführt wird, die durch die Luftströmungen in der Schwebe gehalten werden. Hierdurch läßt sich ein völlig gleichmäßiger weiterer Feuchtigkeitsentzug erzielen.

Da die Düsen für die Zugabe von Fermentierungshilfen innerhalb des Wirbelschichttrockners angeordnet sind, vollzieht sich in diesem Vorrichtungsbereich ein wesentlicher Teil der Fermentierung.

Es hat sich als besonders zweckmäßig erwiesen, der Aufbrecheinrichtung eine Gefriereinrichtung vorzuordnen. Diese kann verschiedenste Ausbildungsformen besitzen. So können die Früchte einige Minuten innerhalb eines Stickstoffdurchlaufgefrierers oder eines $CO_2$-Gefrierers aufgehalten werden, in welchem sie oberflächlich tiefgefrieren. Im Kühlcontainer frieren sie im Laufe der Zeit während des Transportes einschließlich der Bohnen völlig durch und bleiben damit in ihrem besten Zustand nahezu unabhängig vom Zustand bei der Ernte.

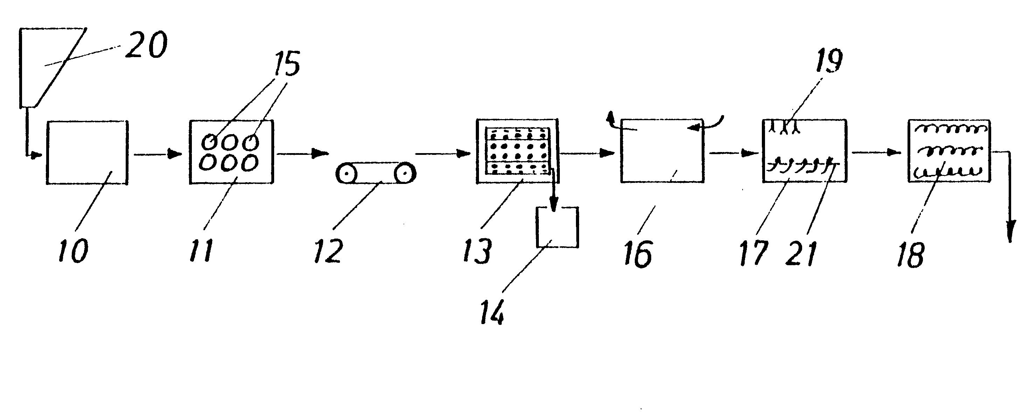

Weitere Einzelheiten, Vorteile und erfindungswesentliche Merkmale der Erfindung ergeben sich aus der nachfolgenden Beschreibung unter Bezugnahme auf die beigefügte Zeichnung. Diese zeigt in schematischer Darstellung die erfindungsgemäße Vorrichtung zur Durchführung des Aufbereitungsverfahrens.

Der Verfahrensablauf vollzieht sich innerhalb der Vorrichtung von links nach rechts. Obwohl die Aufgabe der Früchte jeweils den individuellen Verhältnissen entsprechend ausgebildet sein kann, wird hier davon ausgegangen, daß sich die Früchte in dem Aufgabetrichter 20 befinden. Sie werden von hier aus der Gefriereinrichtung 10 zugeführt. Der Aufbau der Gefriereinrichtung 10 als solcher ist nicht erfindungswesentlich. Er kann herkömmlicher Art sein, wobei es sich etwa um einen Stickstoff- oder $CO_2$-Durchlaufgefrierer handeln kann. Die Gefriereinrichtung kann auch von der übrigen Vorrichtung getrennt vorgesehen sein, wobei die Früchte etwa in gefrorenem Zustand zur Aufbereitungsvorrichtung transportiert werden können. Dabei hat es sich als praktisch erwiesen, lediglich die äußere Schale tiefzugefrieren, wobei die Kälte im Laufe des Transportes dem Fruchtinneren mitgeteilt wird, so daß die völlig durchfrorenen Früchte bei der Aufbereitungsvorrichtung eintreffen.

Die Früchte werden nun einer Aufbrechvorrichtung 11 zugeführt. Innerhalb der Aufbrechvorrichtung 11 befinden sich Quetschwalzen 15 mit Zacken an jeder Walze, wodurch die Früchte gebrochen und in ihre Einzelbestandteile zerlegt werden.

Sie fallen nunmehr auf ein Förderband 12, das alle Bestandteile einem Separator 13 zuführt. Dieser Separator 13 ist als oktagonaler horizontaler Drehzylinder ausgebildet, der Zonen unterschiedlicher Lochung aufweist. Die Bohnen fallen durch die Löcher, während die anderen Teile, wie die parenchymatische Fruchtwand und die Plazenta austreten und etwa einem Behälter 14 zugeführt werden, von wo aus sie für eine weitere Verarbeitung bereitstehen.

Die Bohnen fallen von hier aus in einen Drehtrockner 16, der aus einem horizontalen, sich drehenden Zylinder besteht. Innerhalb des Drehtrockners 16 wirkt ein Gegenstrom warmer Luft auf die Bohnen ein, der sie zunächst auftauen läßt und anschliessend weiter erhitzt, wobei sich die Pulpe verflüssigt. Innerhalb des Drehtrockners 16 kann man Hefen, Aminosäuren und die anderen bekannten Mittel in dosierten Mengen zugeben, um die Fermentierung zu beeinflussen.

Nachdem die Bohnen nur noch einen Feuchtigkeitsgehalt von etwa 50-45 % aufweisen, werden sie einem Wirbelschichttrockner 17 zugeführt. Innerhalb des Wirbelschichttrockners befindet sich eine Lochplatte 21, durch welche Warmluft von unten hindurchströmt, so daß sich oberhalb der Lochplatte 21 ein Fließbett aus Bohnen ausbildet. Die Bohnen werden von der Warmluft umströmt, ohne daß sie auf einer Unterlage aufliegen, so daß sich ein völlig gleichmäßiger Feuchtigkeitsentzug ergibt. Die Endfeuchte der Bohnen beträgt etwa 15 bis 10 % und soll vorzugsweise bei 12 % liegen. Die Betriebsbedinungen des Wirbelschichttrockners sind der jeweiligen Situation anpaßbar. Es werden beispielsweise je nach Schichthöhe und Größe des Trockners ca. 3300 $cm^3$ Luft pro Stunde eingeblasen. Das Bohnenschüttgewicht in diesem halbfeuchten Zustand liegt etwa bei 720 g/l. Die Zuluft kann bei etwa 120 °C liegen, während die Abluft, nachdem die

Bohnen durchwirbelt sind, eine Temperatur von ca. 64 bis 76° besitzt. Die Behandlungsdauer kann zwischen 30 und 60 Minuten liegen und macht vorzugsweise 36 Minuten aus. Der Wirbelschichttrockner kann bei kontinuierlich ablaufendem Gesamtverfahren ebenfalls kontinuierlich oder in Chargen betrieben werden. Zum Abschluß der Trocknung bei chargenweisem Betrieb oder am Trocknerende bei kontinuierlichem Betrieb kann sich eine dreiminütige Durchwirbelung mit Luft von Raumtemperatur anschließen.

Innerhalb des Wirbeltrockners können außerdem noch Sprühdüsen 19 angeordnet sein, über welche Fermentierungshilfen verschiedenster Art zugegeben werden können.

Nachdem die Bohnen einen Feuchtigkeitsgrad von etwa 12 % erreicht haben, werden sie einer Mikrowellenzone 18 zugeführt. Die Mikrowellen versetzen die $H_2O$-Moleküle, d. h., das innerhalb der Bohnen noch befindliche Restwasser, in Schwingungen, wodurch infolge der auftretenden Reibung Wärme entsteht. Die Mikrowellenzone 18 selbst bleibt kühl, während die Bohnen von innen nach außen erhitzt werden. Hierbei verdampft das Restwasser, wobei ohne weiteres eine Feuchtigkeit von weniger als 5 % erzielbar ist, ohne daß die Schale hart oder der Bohnenkern zerstört wird, so daß dieser im besten physikalischen und chemischen Zustand für die weitere Verarbeitung verbleibt. Wie bereits eingangs ausgeführt wurde, wird die Fermentierung im Bereich der Mikrowellenzone 18 abgeschlossen.

Die die Mikrowellenzone verlassenden Bohnen besitzen eine außerordentlich hohe gleichmäßige Qualität. Sie führen zu einem besonderen positiven Aroma und Geschmack, da sich die Fermentierung in einer vorzüglichen Weise steuern und beeinflussen läßt. Es ist erstmals ein einwandfreier hygienischer Zustand der Bohnen gewährleistet, da diese ohne Zwischenlagerung in unmittelbarer Behandlungsfolge der Frucht entnommen sind. Sie können nunmehr abgepackt und dem Markt zugeführt werden. Andererseits können sie auch zuvor geschält werden, wodurch sich eine Gewichtsverminderung und damit eine Kostenersparnis für den Transport ergibt. Schließlich können sie auch unmittelbar der Weiterverarbeitung zugeführt werden.

## Patentansprüche

1. Verfahren zur witterungsunabhängigen, kontinuierlichen Aufbereitung von Kaffee- und Kakaobohnen, bei welchem man die Bohnen aufbricht und von den übrigen Fruchtbestandteilen trennt, die Bohnen anschließend einer Warmlufttrocknung unterwirft und schließlich einer Mikrowellenbehandlung aussetzt, dadurch gekennzeichnet, daß man die Warmlufttrocknung in zwei Stufen durchführt, wobei man in der ersten Stufe eine Trocknung im Gegenluftstrom bis auf einen Feuchtigkeitsgehalt von etwa 47 % und in der zweiten Stufe eine Wirbelschichttrocknung bis auf einen Feuchtigkeitsgehalt von etwa 12 %

durchführt, und in der zweiten Stufe eine Fermentierung unter Zugabe von Fermentierungshilfsmitteln ausführt.

2. Verfahren nach Anspruch 1, dadurch gekennzeichnet, daß man im Anschluß an die zweite Trocknungsstufe eine Durchwirbelung mit Luft von Raumtemperatur etwa 3 Minuten lang durchführt.

3. Vorrichtung zur Durchführung des Verfahrens nach einem der Ansprüche 1 oder 2, mit einer Trocknungseinrichtung, der eine Mikrowellenzone (18) nachgeordnet ist, dadurch gekennzeichnet, daß die Trocknungseinrichtung aus einem Drehtrockner (16) und einem sich an diesen anschließenden Wirbelschichttrockner (17) besteht.

4. Vorrichtung nach Anspruch 3, dadurch gekennzeichnet, daß innerhalb des Wirbelschichttrockners (17) Düsen (19) für die Zugabe von Fermentierungshilfen angeordnet sind.

5. Vorrichtung nach einem der Ansprüche 3 oder 4, dadurch gekennzeichnet, daß der Aufbrecheinrichtung (11, 15) für die Früchte eine Gefriereinrichtung (10) vorgeordnet ist.

**Claims**

1. Method for the weather-independent, continuous preparation of cocoa-nibs and coffeebeans by breaking the nibs and beans, resp., and separating the same from the fruit remainings, subsequently drying the nibs and beans with hot air and finally subjecting the same to a microwave treatment, characterized by carrying out the hot air drying in two steps, during the first step of which reducing humidity in a counter current air to about 47 % and during the second step reducing humidity in a fluidized drying to about 12 %, while carrying out during said second step a fermentation by adding fermentation aids.

2. Method according to claim 1, characterized by providing a turbulence of air at room temperature for three minutes following said second step.

3. Installation for carrying out the method according to one of claims 1 or 2, comprising a drying device followed by a microwave zone (18), characterized in said drying device including a rotary drier (16) followed by a fluidized bed drier (17).

4. Installation according to claim 3, characterized by nozzles (19) being provided within said fluidized bed drier for adding fermentation aids.

5. Installation according to claims 3 or 4, characterized by a freezing device (10) being installed ahead of a breaking-up device (11, 15) for the fruits.

**Revendications**

1. Procédé, réalisable indépendamment du temps, du traitement continu de fèves de cacao et de grains de café, en faisant éclater les fèves et les grains et en les séparant des parties restantes du fruit, après quoi on procède au séchage des fèves et des grains à l'air chaud, puis dans un four à micro-ondes ; cette méthode est caractérisée en ce que le procédé de séchage se fait en deux tranches ; dans la première, on procède au séchage avec air à courants contraires, produisant une réduction de l'humidité à environ 47 %; dans la 2ième tranche, on réduit l'humidité à environ 12 % par séchage à lit fluidisé ; pendant cette 2ième tranche, il y a fermentation en ajoutant des éléments de fermentation.

2. Procédé selon la revendication 1, caractérisé en ce qu'on produit une turbulence d'air à température de la pièce pendant 3 minutes, ceci succédant à la 2ième tranche.

3. Installation pour l'exécution du procédé selon une des revendications 1 ou 2, comprenant un moyen de séchage suivi d'une zone micro-ondes (18), caractérisée par un procédé de séchage se composant d'un sécheur tournant (16) auquel succède un sécheur à lit fluidisé (17).

4. Installation selon la revendication 3, caractérisée en ce que des tuyères (19) sont fixées à l'intérieur du sécheur à lit fluidisé (17) pour ajouter des éléments de fermentation.

5. Installation selon une des revendications 3 ou 4, caractérisée en ce que le procédé d'éclatement des fruits (11, 15) est précédé par un procédé de congélation (10).